# EUROPEAN PATENT APPLICATION

(11) **EP 3 073 271 A1**
(43) Date of publication of application: **28.09.2016**
(21) Application number: 15160389.1
(22) Date of filing: 23.03.2015
(51) Int. Cl.: G01N 35/04

(54) **Method of operating a laboratory automation system and laboratory automation system**

(71) Applicant: Roche Diagnostics GmbH, 68305 Mannheim (DE); F. Hoffmann-La Roche AG, 4070 Basel (CH)
(72) Inventor: Mahmudimanesh, Mohammadreza, 64347 Griesheim (DE)
(74) Representative: Patentanwälte Ruff, Wilhelm, Beier, Dauster & Partner mbB

(57) **Abstract**

The invention relates to a method of operating a laboratory automation system and to a laboratory automation system with which such a method can be performed. The method is directed to serial extraction of a sample by a plurality of laboratory stations such that aliquoting can be omitted.

## Description

### Applicable field and prior art

The invention relates to a method of operating a laboratory automation system and to a laboratory automation system.

Laboratory automation systems can be based, for example, on a one-dimensional sample distribution system or on a two-dimensional sample distribution system. A sophisticated two-dimensional sample distribution system is, for example, disclosed in document EP 2 589 968 A1. It shows a laboratory sample distribution system that can efficiently distribute sample containers between a number of laboratory stations.

Known laboratory automation systems typically enable automatic processing of a sample in different laboratory stations. However, it is common to distribute a sample that has been delivered in a sample container to a plurality of sample containers such that one separate sample container is delivered to each relevant laboratory station. This multiplies the number of sample containers to be handled by the sample distribution system. Such an operation is typically called "aliquoting" and is typically performed by an aliquot station as disclosed in the document cited above.

### Objects and solutions

It is an object of the present invention to provide for a method of operating a laboratory automation system, in which an increase in the number of sample containers to be handled can be omitted or reduced. It is a further object of the present invention to provide for a laboratory automation system that is able to perform such a method.

This object is solved by a method according to claim 1 and a laboratory automation system according to claim 7. Preferred embodiments can, for example, be derived from the respective dependent claims.

The invention relates to a method of operating a laboratory automation system. The laboratory automation system comprises a plurality of analyzing stations and at least one laboratory sample distribution system adapted to distribute sample containers comprising samples to be analyzed between the analyzing stations. The samples are typically to be analyzed by means of the analyzing stations.

The inventive method comprises the following steps.
- delivering a sample container to a first analyzing station by means of the laboratory sample distribution system,
- at least partially extracting a sample contained in the sample container by means of the first analyzing station,
- delivering the sample container to a second analyzing station by means of the laboratory sample distribution system, and
- at least partially extracting the sample by means of the second analyzing station.

With the inventive method, it is possible to omit aliquoting and to provide a sample to each of the analyzing stations just by serially delivering the sample container in which the sample is contained to the different analyzing stations. Each analyzing station just uses an amount as required to analyze the sample in the analyzing station. This reduces system load significantly, because a multiplication (aliquoting) of the number of sample containers to be handled is omitted.

Especially the sample can be extracted partially by means of the second analyzing station. Thus, a part of the sample can be left for subsequent analyzing stations.

An analyzing station may be a pre-analytical, an analytical or a post-analytical station. Pre-analytical stations may be adapted to perform any kind of pre-processing of samples, sample containers and/or sample container carriers. Analytical stations may be adapted to use a sample or part of the sample and a reagent to generate a measuring signal, the measuring signal indicating if and in which concentration, if any, an analyte is existing. Post-analytical stations may be adapted to perform any kind of post-processing of samples, sample containers and/or sample container carriers.

The pre-analytical, analytical and/or post-analytical stations may comprise at least one of a decapping station, a recapping station, a centrifugation station, an archiving station, a pipetting station, a sorting station, a tube type identification station, and a sample quality determining station.

According to an embodiment, an extracting field is assigned for each analyzing station in the laboratory sample distribution system, preferably on a transport plane of the laboratory sample distribution system. The sample is extracted at the assigned extracting field. This allows for an easy extraction because a sample container has only to be placed at the extracting field, which can be done by the laboratory sample distribution system. It is not required to take the sample container away from the extracting field.

According to an embodiment, the method comprises one or more of the following steps:
- delivering the sample container to a further analyzing station by the laboratory sample distribution system, and
- further extracting the sample by the further analyzing station.

Such an embodiment can be used in order to provide for more than two analyzing stations that extract the sample from the sample container. It should be noted that any number of laboratory stations can be used, wherein each laboratory station extracts the sample partially. It should also be noted that the inventive method can be combined with an aliquoting operation if some analyzing steps have to be done in parallel, for example.

According to an embodiment, the laboratory sample distribution system is adapted to transport sample containers and/or samples in two dimensions. It has been observed that a two-dimensional laboratory sample distribution system significantly simplifies operation of the inventive method. Typically, the sample containers can be distributed independently from one another.

According to an embodiment, the method comprises one or more of the following steps being performed before the step of delivering the sample container to the first analyzing station:
- centrifuging the sample,
- identifying the sample container or the sample,
- quality measuring of the sample container or the sample.

These are steps that have been observed to yield a positive effect on analyzing results and/or handling of the sample containers.

According to an embodiment, the extracting of the sample by a respective analyzing station is performed by pipetting the sample directly by the respective analyzing station. This omits a need for an intermediate device such as a sample container handling station. In an embodiment, the respective analyzing station comprises a pipetting head that can be positioned just over a sample container being placed on the sample distribution system, preferably on an extracting field, and can extract the sample at least partially while the sample container remains on the extracting field.

According to an embodiment, the sample is extracted at each of the analyzing stations using a disposable pipetting head. The pipetting head is disposed and replaced after one step of pipetting. This reduces the risk of cross-contamination between samples because it ensures that each sample is extracted with a fresh, clean pipetting head.

The invention relates further to a laboratory automation system comprising a plurality of analyzing stations and a laboratory sample distribution system. The laboratory sample distribution system comprises a number of sample container carriers, wherein the sample container carriers are adapted to carry one or more sample containers, wherein the sample containers comprise samples to be analyzed by means of the analyzing stations. The laboratory sample distribution system comprises a transport plane, wherein the transport plane is adapted to support the sample container carriers and wherein for each analyzing station an extracting field is assigned on the transport plane, wherein the sample is (partially) extracted at the assigned extracting field. The laboratory sample distribution system comprises drive means, wherein the drive means are adapted to move or propel the sample container carriers on or over the transport plane. The laboratory sample distribution system further comprises a control device, wherein the control device is configured to control the drive means such that the sample container carriers move over the transport plane along predetermined transport paths. The control device can be configured to control the drive means such that the sample container carriers move simultaneously and independently from one another over the transport plane along predetermined transport paths.

The laboratory automation system further comprises a process control unit, wherein the process control unit is configured to control the analyzing stations and the laboratory sample distribution system such that a method according to the invention is performed.

The laboratory automation system according to the invention is specifically adapted to perform the inventive method. Regarding the inventive method, all embodiments and variations can be applied accordingly.

It should be noted that the process control unit and the control device can be implemented as separate units or can be combined to one single unit.

According to an embodiment, the laboratory automation system lacks an aliquoting station. It can also be said that the laboratory automation system is aliquoting-station-free. This can reduce system complexity, especially if all samples are distributed according to the inventive method.

According to an embodiment, the drive means are formed as electromagnetic actuators being located below the transport plane and being controllable by the control device. The sample container carriers each comprise a magnetically active device for interaction with a magnetic field generated by means of the electromagnetic actuator such that a magnetic drive force is applied to the sample container carriers.

According to an embodiment, the drive means are formed as wheels driven by electric motors being located in the sample containers and being (remote) controllable by the electronic control unit.

According to an embodiment, the analyzing stations comprise analyzing means and extracting means, wherein the extracting means are adapted to (partially) extract a sample contained in the sample container. By means of such extracting means, it is possible to ensure that each analyzing station can extract samples needed for analyzing independently.

According to an embodiment, the extracting means comprise an aspiration opening, wherein the extracting means are adapted to move the aspiration opening over the corresponding extracting field of the laboratory station. This ensures that the sample can be extracted without removing a sample container from the transport plane.

According to an embodiment, the aspiration opening is formed in a pipetting head, wherein the extracting means comprise a pipetting head handling means adapted to dispose and replace a pipetting head after each single extraction of a sample. This ensures that fresh pipetting heads are used for each extraction operation, so that cross-contamination can be prevented.

### Brief description of the drawing

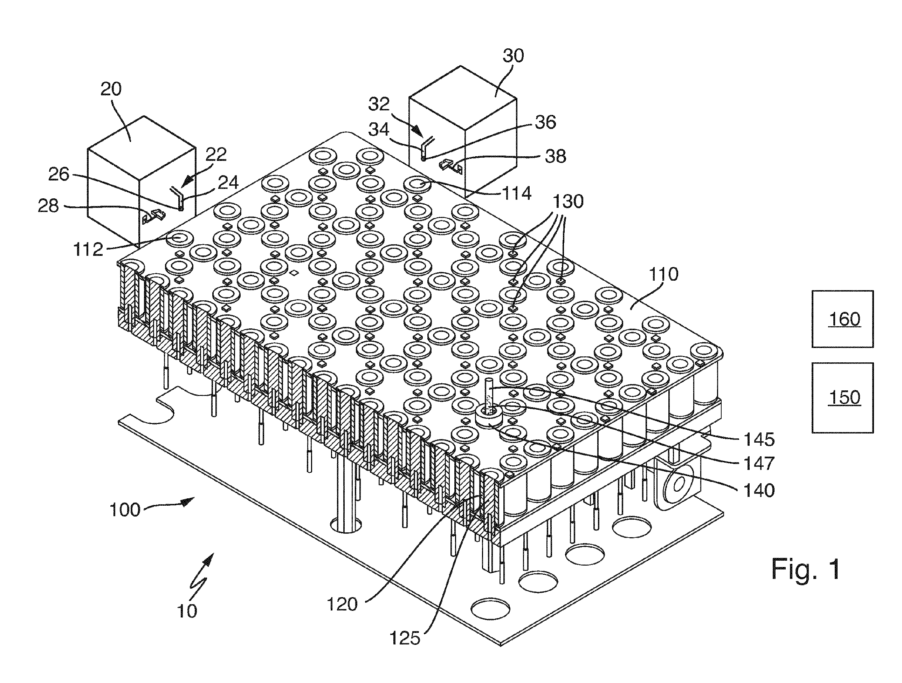

The invention will now be described in detail with reference to the drawing. In the drawing, fig. 1 shows a laboratory automation system according to the invention.

### Detailed description of the embodiment

Fig. 1 shows a laboratory automation system 10. The laboratory automation system 10 comprises a first laboratory station 20, a second laboratory station 30, a laboratory sample distribution system 100 and a process control unit 160.

The laboratory sample distribution system 100 comprises a transport plane 110, a plurality of electromagnetic actuators 120 embodied as solenoids each comprising a respective ferromagnetic core 125, a plurality of position sensors 130 being embodied as Hall-sensors, a sample container carrier 140 and an electronic control unit 150.

The sample container carrier 140 is adapted to move on the transport plane 110. It should be noted that a typical laboratory sample distribution system 100 comprises a plurality of sample container carriers 140, and that the single sample container carrier 140 shown in fig. 1 is only present for illustrative purposes.

The sample container carrier 140 comprises a permanent magnet that is not shown in fig. 1, wherein the permanent magnet allows for an interaction with a magnetic field generated by means of the electromagnetic actuators 120.

The electromagnetic actuators 120 can be driven by the electronic control unit 150 such that the sample container carrier 140 moves along a corresponding transport path. The magnetic field generated by the permanent magnet of the sample container carrier 140 can be sensed by means of the position sensors 130, which are also in data connection with the electronic control unit 150. This allows the electronic control unit 150 to determine where the sample container carrier 140 is currently located.

The sample container carrier 140 carries a sample container 145 containing a sample 147. The sample 147 should be analyzed by the first laboratory station 20 and the second laboratory station 30.

The first laboratory station 20 comprises an extracting means 22 with a pipetting head 24. The pipetting head is removable such that a new and clean pipetting head 24 can be used for each extraction operation. The pipetting head 24 comprises an aspiration opening 26 which is formed at the bottom of the pipetting head 24. The first laboratory station 20 further comprises a pipetting head handling means 28 embodied as a small crane being adapted to change the pipetting head 24 by another pipetting head. It should be noted that the components of the first laboratory station 20 are only shown schematically for illustrative purposes.

The pipetting head 24 with its aspiration opening 26 is positioned above a first extracting field 112. Thus, the control unit 150 can move the sample container 140 on the first extracting field 112, and the extracting means 22 can be moved down together with the pipetting head 24 such that the aspiration opening 26 dives into the sample 147. This allows for an (partial) extraction of the sample 147 by the laboratory station 20 itself. There is no necessity to take the sample container 145 out of the sample container carrier 140 in order to extract the sample 147 for analyzing.

Typically, the sample 147 is only extracted partially by the first laboratory station 20. Then the sample container carrier 140 is moved by the electronic control unit 150 to the second laboratory station 30. The second laboratory station 30 comprises an extraction means 32 having a pipetting head 34 with an aspiration opening 36 and a pipetting head handling means 38. With regard to these details reference is made to the corresponding description of the details of the first laboratory station 20.

On the transport plane 110, there is arranged a second extracting field 114 just below the pipetting head 34 of the second laboratory station 30. This allows for an extraction, especially a partial extraction of the sample 147 contained in the sample container 145.

Given these components, the sample 147 contained in the sample container 145 can first be extracted partially by the first laboratory station 20 and can then be further partially extracted by the second laboratory station 30 without taking the sample container 145 out of the sample container carrier 140. This allows for a very efficient handling while omitting the need for an aliquoting station and an aliquoting operation which would lead to a multiplication of sample containers that have to be handled by the sample distribution system 100.

It should further be noted that a typical laboratory automation system 10 comprises more than two laboratory stations 20, 30 and that the first and second laboratory stations 20, 30 are shown for illustrative purposes here only.

The process control unit 160 is configured to fundamentally control and synchronize the analyzing stations 20, 30 and the laboratory sample distribution system 100.

## Claims

1. Method of operating a laboratory automation system (10),
- wherein the laboratory automation system (10) comprises a plurality of analyzing stations (20, 30) and at least one laboratory sample distribution system (100) adapted to distribute sample containers (145) comprising samples (147) to be analyzed between the analyzing stations (20, 30),
- wherein the method comprises the steps:
- delivering a sample container (145) to a first analyzing station (20) by means of the laboratory sample distribution system (100),
- partially extracting the sample (147) contained in the sample container (145) by means of the first analyzing station (20),
- delivering the sample container (145) to a second analyzing station (30) by means of the laboratory sample distribution system (100), and
- extracting or partially extracting the sample by means of the second analyzing station (30).

2. Method according to claim 1,
**characterized in that**
- for each analyzing station (20, 30) an extracting field (112, 114) is assigned in the laboratory sample distribution system (100), preferably on a transport plane (110) of the laboratory sample distribution system (100), wherein the sample (147) is extracted at the assigned extracting field (112, 114).

3. Method according to one of the preceding claims,
**characterized in that**
- the laboratory sample distribution system (100) is adapted to distribute sample containers (145) in two dimensions.

4. Method according to one of the preceding claims,
**characterized in that**
- the method comprises one or more of the following steps being performed before the step of delivering the sample container (145) to the first analyzing station:
- centrifuging the sample (147),
- identifying the sample container (145) or the sample (147),
- quality measuring of the sample container (145) or of the sample (147).

5. Method according to one of the preceding claims,
**characterized in that**
- the step of partially extracting the sample (147) by a respective analyzing station (20, 30) is performed by pipetting the sample (147) directly by the respective analyzing station (20, 30).

6. Method according to claim 5,
**characterized in that**
- the sample is partially extracted at each of the analyzing stations (20, 30) using a disposable pipetting head (24, 34),
- wherein each pipetting head (24, 34) is disposed and replaced after one step of pipetting.

7. Laboratory automation system (10), comprising:
- a plurality of analyzing stations (20, 30),
- a laboratory sample distribution system (100), comprising
- a number of sample container carriers (140), wherein the sample container carriers (140) are adapted to carry one or more sample containers (145), wherein the sample containers (145) comprise samples (147) to be analyzed by means of the analyzing stations (20, 30),
- a transport plane (110), wherein the transport plane (110) is adapted to support the sample container carriers (140) and wherein for each analyzing station (20, 30) an extracting field (112, 114) is assigned on the transport plane (110), wherein a respective sample (147) is extracted at the assigned extracting field (112, 114),
- drive means (120), wherein the drive means (120) are adapted to move the sample container carriers (140) on the transport plane (110), and
- a control device (150), wherein the control device (150) is configured to control the drive means (120) such that the sample container carriers (140) move over the transport plane (110) along predetermined transport paths, and
- a process control unit (160), wherein the process control unit (160) is configured to control the analyzing stations (20, 30) and the laboratory sample distribution system (100) such that a method according to one of claims 1 to 6 is performed.

8. Laboratory automation system (10) according to claim 7,
**characterized in that**
- the laboratory automation system (10) lacks an aliquoting station.

9. Laboratory automation system (10) according to claim 7 or 8,
**characterized in that**
- the drive means (120) are formed as electromagnetic actuators (120) being located below the transport plane (110) and being controllable by the control device (150),
- wherein the sample container carriers (140) each comprise a magnetically active device for interaction with a magnetic field generated by the electromagnetic actuators (120) such that a magnetic drive force is applied to the sample container carriers (140).

10. Laboratory automation system (10) according to one of claims 7 to 9,
**characterized in that**
- the drive means are formed as wheels driven by electric motors being located in the sample container carriers (140) and being controllable by the electronic control unit (150).

11. Laboratory automation system (10) according to one of claims 7 to 10,
**characterized in that**
- the analyzing stations (20, 30) comprise:
- analyzing means, and
- extracting means (22, 32), wherein the extracting means (22, 32) are adapted to partially extract a sample (147) contained in the sample container (145).

12. Laboratory automation system (10) according to claim 11,
**characterized in that**
- the extracting means (22, 32) comprise an aspiration opening (26, 36), wherein the extraction means (22, 32) are adapted to move the aspiration opening (26, 36) over the corresponding extracting field (112, 114) of the laboratory station (20, 30).

13. Laboratory automation system (10) according to claim 12,
**characterized in that**
- the aspiration opening (26, 36) is formed in a pipetting head (24, 34), wherein the extracting means (22, 32) comprise a pipetting head handling means (28, 38) adapted to dispose and replace a pipetting head (24, 34) after each single extraction of a sample (147).
